# EUROPEAN PATENT APPLICATION

(11) **EP 4 322 028 A1**
(43) Date of publication of application: **14.02.2024**
(21) Application number: 23186246.7
(22) Date of filing: 18.07.2023
(51) Int. Cl.: G06F 16/78, G06F 3/16, G06F 3/048

(54) **DATA PROCESSING APPARATUSES AND METHODS**

(30) Priority: 12.08.2022 GB 202211806
(71) Applicant: Sony Group Corporation, Tokyo 108-0075 (JP)
(72) Inventor: HOOPER, Daniel, Basingstoke, RG22 4SB (GB); RYDER, Paul, Basingstoke, RG22 4SB (GB); CHENG, Ivan, Basingstoke, RG22 4SB (GB)
(74) Representative: D Young & Co LLP

(57) **Abstract**

A data processing apparatus comprising circuitry configured to: receive, from a second data processing apparatus via a web application, an electronic file comprising audio information encoded in a spatial audio format; output the received electronic file for virtualisation of the audio information encoded in the spatial audio format, the virtualisation comprising changing a number of channels of the audio information to allow playback of the audio information via the web application while retaining a spatial audio effect of the audio information; receive a virtualised version of the electronic file comprising the virtualised audio information; and provide, via the web application, the virtualised version of the electronic file.

## Description

### BACKGROUND

### Field of the Disclosure

The present disclosure relates to a data processing apparatuses and methods.

### Description of the Related Art

The "background" description provided is for the purpose of generally presenting the context of the disclosure. Work of the presently named inventors, to the extent it is described in the background section, as well as aspects of the description which may not otherwise qualify as prior art at the time of filing, are neither expressly or impliedly admitted as prior art against the present disclosure.

There is today a large range of formats for digital audio files. Some of these aim to enable an improved user experience. For example, in addition to traditional formats such as MP3 (MPEG-1 Audio Layer III or MPEG-2 Audio Layer III), AAC (Advance Audio Coding), FLAC (Free Lossless Audio Codec) and WAV (Waveform Audio File Format), new audio formats, such as 360 Reality Audio (360RA) created by Sony ^{®} are available. 360RA allows artists or creators to place individual sounds (such as vocals, piano, guitar, bass and even live audience sound) in a virtual 360 spherical sound field, creating new immersive audio experiences.

A problem with such new audio formats, however, is that they often require specialist hardware and/or software for an audio file in that format to be played back. Such specialist hardware and/or software is often not immediately accessible to a listener (who may, for example, be wishing to listen to the audio file on a mainstream device such as a smartphone, tablet computer or laptop) and may also be aimed at audio production professionals rather than users (e.g. musicians) who create music but are not experts at converting the created music to a finished recording (meaning operation of the hardware and/or software is overly complex and cumbersome for such users). This makes distribution and adoption of new audio formats such as 360RA more difficult and deprives users of the technical benefits of such formats.

### SUMMARY

The present disclosure is defined by the claims.

### BRIEF DESCRIPTION OF THE DRAWINGS

Non-limiting embodiments and advantages of the present disclosure are explained with reference to the following detailed description taken in conjunction with the accompanying drawings, wherein:
Fig. 1 schematically illustrates a spherical space in which different sounds are virtually placed;
Fig. 2 schematically illustrate an example system;
Figs. 3A and 3B schematically illustrate example components of data processing apparatuses;
Fig. 4 schematically illustrates a first example interactive graphical user interface of a web application;
Fig. 5 schematically illustrates example functionality of the interactive graphical user interface of Fig. 4;
Fig. 6 schematically illustrates a second example interactive graphical user interface of a web application;
Fig. 7 schematically illustrates an example metadata structure;
Fig. 8 schematically illustrates a third example interactive graphical user interface of a web application;
Fig. 9 shows a first example data processing method; and
Fig. 10 shows a second example data processing method.

Like reference numerals designate identical or corresponding parts throughout the drawings.

### DETAILED DESCRIPTION OF THE EMBODIMENTS

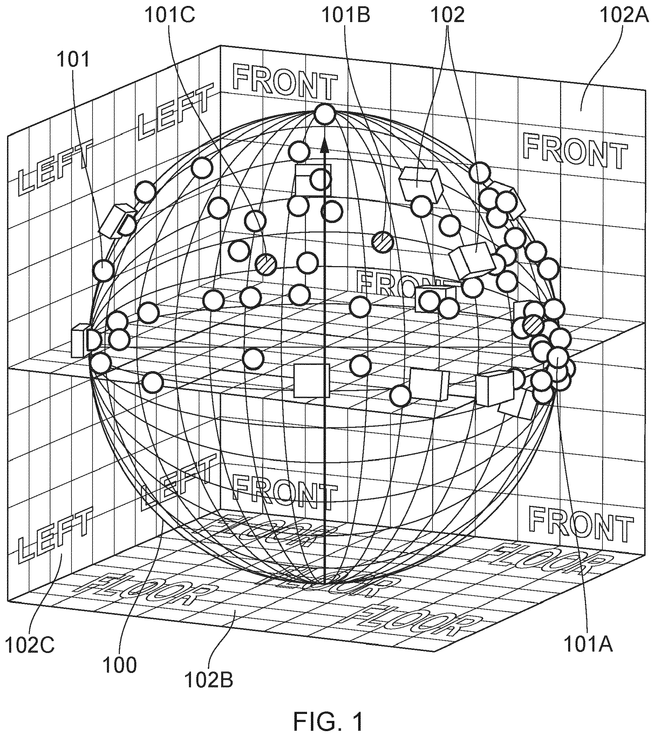

Fig. 1 shows a spherical space 100 in which different sounds are virtually placed so as to provide a listener (located at the centre of the spherical space) with a virtual experience of being spatially surrounded by sound (this may be referred to as a spatial effect). The example of Fig. 1 relates to the 360RA audio format, which is an example of a spatial audio format. An audio file in a spatial audio format may be referred to as a spatial audio file.

Each point 101 in Fig.1 indicates a virtual location of a sound source in the spherical space 100. For example, point 101A may indicate the virtual location of an audience member making clapping or cheering sounds. Point 101B may indicate the virtual location of a guitar. Point 101C may indicate the virtual location of a drum.

Fig. 1 also shows tangential planes 102A, 102B and 102C representing, respectively, a front region, floor region and left region of the spherical space. There will also be similar tangential planes (not shown) representing a right region, a back region and a ceiling region of the spherical space. These indicate the required orientation of the listener with respect to the spherical space in order for them to experience the sound sources (e.g. those of points 101A, 101B and 101C) in their correct virtual locations. The listener is considered to face the front region and have their back to the back region. The left region is considered to be on the left hand side of the listener and the right region is considered to be on the right hand side of the listener. The floor region is considered to be underneath the listener and the ceiling region is considered to be above the listener.

The spherical space 100 is defined by the positions 102 of a plurality of loudspeakers. The positions of the loudspeakers define the outer surface of the sphere. Each loudspeaker is associated with a respective audio channel. For example, in 360RA, there are 13 (or 14) loudspeakers with 13 (or 14) respective audio channels defining the spherical space.

During creation of a spatial audio file, an audio signal representative of the sound of a given sound source is appropriately distributed between the audio channels according to the desired virtual location of the sound source in the spherical space 100.

For example, to make an audience member who is clapping or cheering seem to the listener to be located at point 101A (on the right hand side of the listener), the distribution of the audio signal representing the clapping or cheering among the loudspeakers will be weighted unevenly towards the speakers on the right hand side of the listener.

In another example, to make a guitar seem to the listener to be located at point 101B (in front of the listener), the distribution of the audio signal representing the guitar sound among the loudspeakers will be weighted unevenly towards the speakers in front of the listener.

In another example, to make a drum seem to the listener to be located at point 101C (behind the listener), the distribution of the audio signal representing the drum sound among the loudspeakers will be weighted unevenly towards the speakers behind the listener.

A spatial audio file will therefore contain information defining the audio signal of the audio channel of each loudspeaker defining the spherical space. Thus, for example, a 360RA spatial audio file will contain information defining the audio signal of each of its 13 (or 14) audio channels. The spatial audio file may be encoded in an appropriate audio format (such as MP4) which enables the encoding of a sufficient number of audio channels.

The spatial audio file may then be played back using the correct number of loudspeakers (e.g. 13 (or 14) in the case of 360RA) in the correct relative locations (e.g. defining a spherical space with the user located at the centre). Alternatively, the spatial audio file may go through a further virtualisation process (using a suitable head-related transfer function (HRTF) in the case of a binaural stereo representation, for example) to allow it to be played through a smaller number of loudspeakers (e.g. stereo headphone speakers, a soundbar, or 5.1 surround sound speakers) whilst retaining the spatial effect. That is, the virtualisation process reduces the number of output audio channels (e.g. from 13 (or 14) channels to 2 channels for stereo or to 6 channels for 5.1 surround sound) whilst retaining the spatial effect. The virtualisation process may also be followed by format conversion of the spatial audio file (e.g. from MP4 to MP3, AAC, WAV or FLAC) after the number of output channels is reduced. Various virtualisation processes, such as the 360RA virtualisation process, are already known and are therefore not described in detail here.

Both ways of playing back a spatial audio file, however, may present technical problems to listeners. For example, to play the spatial audio file without virtualisation, the listener must have the necessary hardware correctly set up (e.g. 13 (or 14) speakers positioned to define the spherical space 100 of Fig. 1). On the other hand, to play the spatial audio file with virtualisation, the virtualisation process must first be carried out. This is typically done on the production side as part of the professional production workflow which requires specialist skills in music production which many listeners may not have. Alternatively, on the consumer side, specialised software and/or hardware may need to be used for virtualisation. Many users, however, may not have access to such software and/or hardware. Furthermore, the spatial audio file may also be in a file format which is not widely supported by mainstream playback devices used by listeners. For example, standard web browsers do not support playback of some spatial audio files.

Thus, despite the technical benefits of spatial audio formats such as 360RA, problems remain in increasing the mainstream adoption of these formats. This is especially the case in music production, since collaboration between a music producer and a recording artist often requires different mixes of an audio track to be tried and tested by both parties before the track is finalised and used to create a master recording. For example, a producer may want the thoughts of a recording artist on a new mix of a track in a spatial audio format (this may be referred to as a spatial audio mix). The recording artist, however, may not have the hardware and/or software or technical expertise to play back the received spatial audio file. This is particularly likely if the recording artist is in a different location to the producer and/or is travelling (as is often the case) and only has access to a mainstream music playback device such as a smartphone, tablet computer or laptop without specialised software. There is therefore a desire to address these problems.

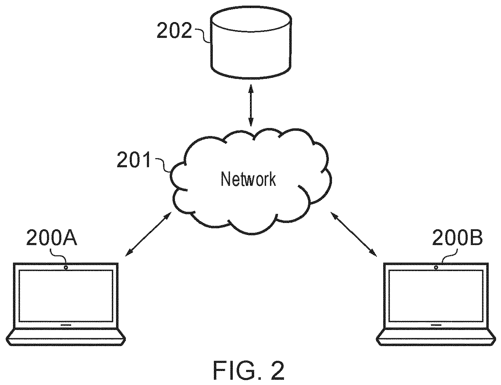

Fig. 2 shows an example system comprising a first data processing apparatus / device 200A, a second data processing apparatus / device 200B and a third data processing apparatus / device 202. The data processing apparatuses may send data to and receive data from each other over a network 201 (e.g. the internet).

In this example, the data processing apparatus 200A is a laptop computer to be operated by a recording artist and the data processing apparatus 200B is a laptop computer to be operated by a music producer. However, the data processing apparatuses 200A and 200B may instead be any other type of data processing apparatus (for example, a smartphone, tablet computer, desktop computer or the like). In an example, the data processing apparatus 200B is configured to execute professional music production software. The data processing apparatus 200A is not necessarily configured to execute such software.

In this example, the data processing apparatus 202 is a server. Each of the data processing apparatuses 200A and 200B may retrieve data from and store data on the server 202 (subject to any appropriate authorisation and/or authentication).

The system of Fig. 2 thus allows a recording artist (for example, a person or group of people who sing and/or play musical instrument(s)) and a music producer (for example, a person who mixes sound from the voice(s) and/or musical instrument(s) of the recording artist to create a master recording) to share digital information with each other, either directly or via the server 202.

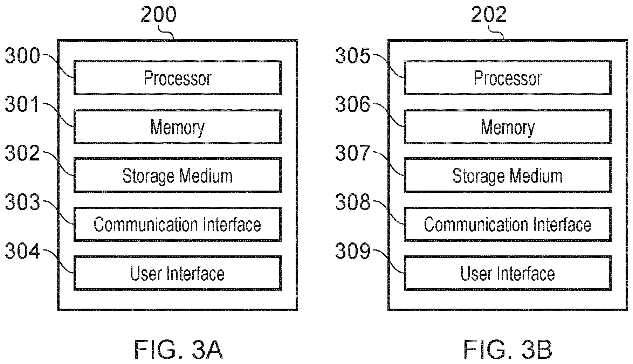

Fig. 3A shows some components of a data processing apparatus 200. The first and second data processing apparatuses 200A and 200B are examples of the data processing apparatus 200. The data processing apparatus 200 comprises a processor 300 for executing electronic instructions, a memory 301 for storing the electronic instructions to be executed and electronic input and output information associated with the electronic instructions, a storage medium 302 (e.g. a hard disk drive or solid state drive) for long term storage of digital information, a communication interface 303 for sending electronic information to and/or receiving electronic information from one or more other apparatuses (e.g. over the network 201) and a user interface 205 (e.g. a touch screen, a non-touch screen, buttons, a keyboard and/or a mouse) for receiving commands from and/or outputting information to a user. Each of the processor 300, memory 301, storage medium 302, communication interface 303 and user interface 304 are implemented using appropriate circuitry, for example. The processor 300 controls the operation of each of the memory 301, storage medium 302, communication interface 303 and user interface 305.

Fig. 3B shows some components of the data processing apparatus 202. The data processing apparatus 202 comprises a processor 305 for executing electronic instructions, a memory 306 for storing the electronic instructions to be executed and electronic input and output information associated with the electronic instructions, a storage medium 307 (e.g. a hard disk drive or solid state drive) for long term storage of digital information, a communication interface 308 for sending electronic information to and/or receiving electronic information from one or more other apparatuses (e.g. over the network 201) and a user interface 209 (e.g. a touch screen, a non-touch screen, buttons, a keyboard and/or a mouse) for receiving commands from and/or outputting information to a user. Each of the processor 305, memory 307, storage medium 307, communication interface 308 and user interface 309 are implemented using appropriate circuitry, for example. The processor 305 controls the operation of each of the memory 306, storage medium 307, communication interface 308 and user interface 309.

In an example, the server 202 hosts a web-based software application (web application). The web application is executed by the processor 305. Each of the data processing apparatuses 200A and 200B may interact with the web application by transmitting requests to the web application and receiving responses from the web application over the network 201 using a web browser software application (web browser, e.g. Chrome ^{®}, Safari ^{®}, Edge ^{®} or the like) executed by its processor 300.

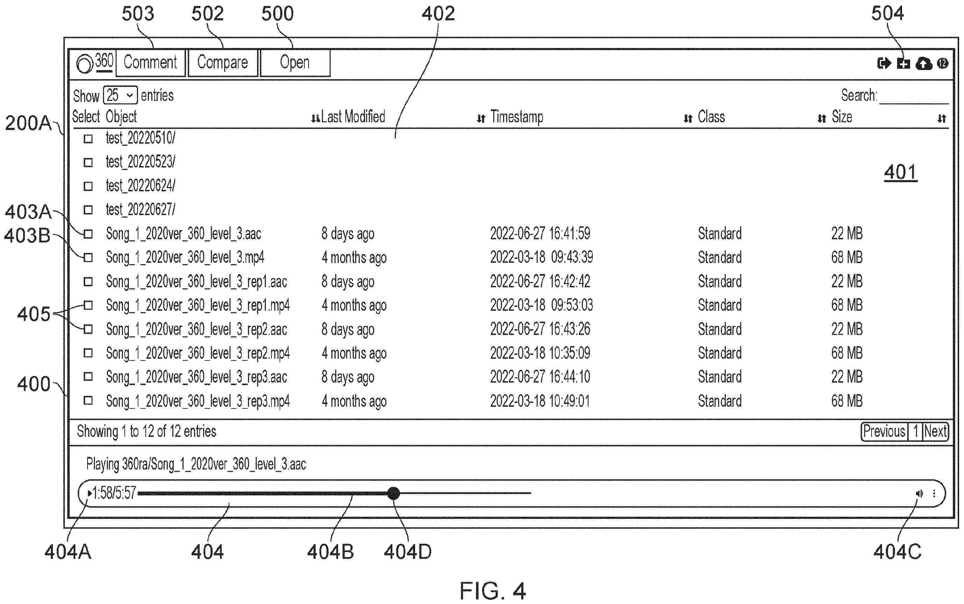

Fig. 4 shows a home graphical user interface 401 (GUI) of the web application as displayed in a web browser executed by the data processing apparatus 200A, for example. In this example, the user interface 304 of the data processing apparatus 200A comprises an electronic display 400 (e.g. a liquid crystal display (LCD), organic light emitting diode (OLED) display or the like) on which the GUI 401 of the web application is displayed.

The GUI 401 comprises a file region 402 listing a plurality of audio files. The user is able to cause playback of a particular audio file by selecting its title. The user does this by clicking a particular title with a mouse (if the user interface 304 comprises a mouse, not shown) or by touching a particular title with their finger (if the electronic display is a touch screen), for example. For instance, to cause playback of the file 403A, the user clicks on or touches its title "Song_1_2020ver_360_level_3.aac".

Playback of a selected file is controlled using playback controls 404. The playback controls 404 include, for example, a play / pause virtual button 404A, a progress bar 404B and a volume virtual button 404C. When the play / pause virtual button 404A is clicked or touched by the user, this causes playback to be alternately paused or resumed. The progress bar 404B allows the user to see the progress of the playback and, by clicking or touching a location along the progress bar 404A, cause the playback to skip forwards (or backwards) to that location. The current playback position is indicated by progress marker 404D. When the volume virtual button 404C is clicked or touched by the user, this causes a volume slider (not shown) to be displayed to allow the user to increase or decrease the volume of the audio file playback.

The audio files in the list are stored by the server (e.g. in storage medium 307). When a user selects an audio file for playback, a request is transmitted to the server over the network 201. In response, the audio file is received from the server and played back. Playback of the audio file may begin when only a portion of the audio file has been received from the server. The remainder of the audio file is then received during playback. This is referred to as streaming and occurs as long as, for example, the rate at which data representing the audio file is received is greater than the rate at which the data is read to play back the audio file.

In Fig. 4, the same audio information (e.g. recorded audio track) is represented by two separate audio files. This is exemplified by audio files 403A and 403B. The difference is the audio format. Specifically, audio file 403A ("Song_1_2020ver_360_level_3.aac") and audio file 403B ("Song_1_2020ver_360_level_3.mp4") represent the same recorded audio track. However, audio file 403A is in an AAC format and audio file 403B is in an MP4 format.

It is common for today's web browsers to be able to play back AAC format files, including spatial audio files virtualised in the ACC format. It is not common for today's web browsers to be able to play back all spatial audio formats. However, it is common for music producers to nonetheless generate spatial audio files that cannot be played back using a web browser (since this may be the default output format of the professional production workflow to generate spatial audio files).

This can make collaboration between, for example, recording artists and music producers more difficult. For instance, the music producer may generate, in a non-virtualised format, a new spatial audio file representing a new spatial audio mix for review by the recording artist. The recording artist, however, may only have access to a mainstream audio device (such as a smartphone, tablet computer or laptop computer) with a web browser. The recording artist will therefore not be able listen to the spatial audio file in its received format. Furthermore, as discussed above, virtualisation of the spatial audio file (and subsequent conversion of the file to a web browser-compatible format such as AAC or MP3) is a task which typically requires dedicated hardware or software, which the recording artist may not have. Also, even if the virtualisation of the spatial audio file were to be done at the music production side, this can still be a cumbersome operation. For example, it is desirable for a music producer to be able quickly and easily generate different spatial audio mixes (and corresponding spatial audio files) for review by a recording artist without also having to manually virtualise every spatial audio file before it is shared.

To address this, the web application executed by the server 202 is able to provide input to and receive output from the necessary virtualisation software. For example, the virtualisation software may be comprised within the web application, may take the form as a plugin for the web application and/or may be accessible to the web application via a suitable application programming interface (API) or the like. In general, the virtualisation software may be a software application executed by the server 202 or another server (not shown) connected to the server 202 (e.g. via the network 202). In the case of 360RA files, the virtualisation software may carry out, for example, the known 360RA virtualisation process, for example.

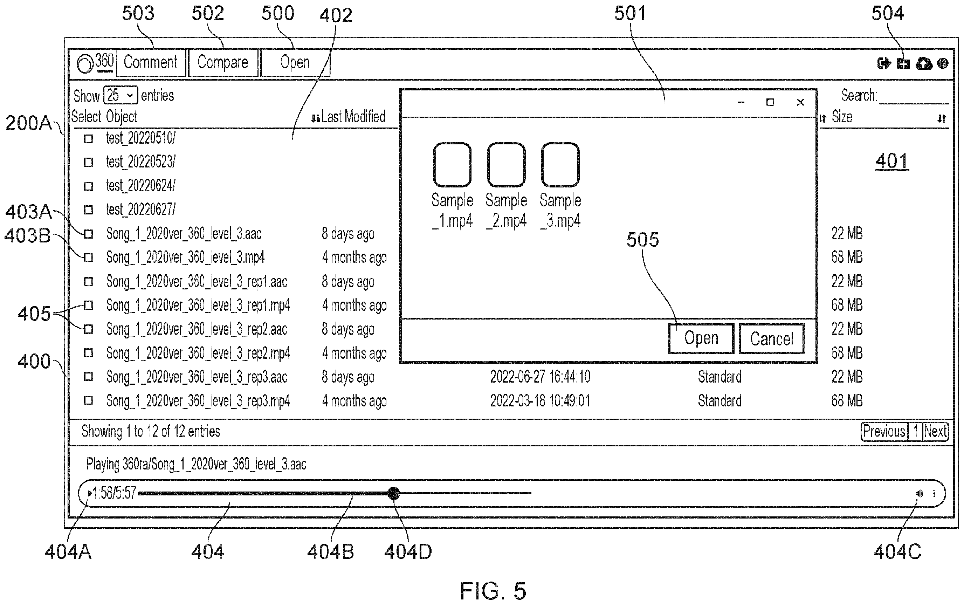

In an example, the web application includes a drag-and-drop interface for allowing virtualisation of a received spatial audio file. This is exemplified in Fig. 5. This may be used when, for example, a first user (e.g. recording artist) of the device 200A receives a new spatial audio mix in the form of a non-virtualised MP4 spatial audio file from a second user (e.g. music producer) of the device 200B. For example, the spatial audio file may be created by the second user using professional music production software on the device 200B and shared with the first user via email or a web-based file sharing surface (e.g. Sony ^{®} Ci or the like). The first user locally saves the non-virtualised MP4 spatial audio file to the device 200A (e.g. to storage medium 302).

The first user is then able to virtualise the received non-virtualised MP4 spatial audio file by selecting (e.g. touching or clicking) the "Open" virtual button 500 of the web application. This causes a file explorer window 501 to open. The file explorer window allows the user to browse through files and folders stored locally on the device 200A. In this simplified example, the user has opened a folder containing three audio files ("Sample_1.mp4", "Sample_2.mp4" and "Sample_3.mp4") using the file explorer window. Each of these files are non-virtualised MP4 spatial audio files that, currently, cannot be played back using a web browser (e.g. the web browser via which the GUI 401 is currently being displayed).

The user selects which of the audio files they wish to listen to and then drags and drops this file into the file region 402 of the web application (e.g. using a mouse or a touch screen drag operation). Alternatively, the user may select the file they wish to listen to (e.g. causing it to become visually distinguished with respect to the other files) and select the "Open" virtual button 505. In response, this causes the device 200A to upload the non-virtualised MP4 spatial audio file to the server 202. It also causes a request to perform virtualisation on the non-virtualised MP4 spatial audio file to be transmitted to the server. In response, the server 202 performs virtualisation on the non-virtualised MP4 spatial audio file (using the virtualisation software) to generate a virtualised version of the audio file in a format which is compatible with the web browser (e.g. AAC, WAV or MP3). In this example, an AAC format audio file is generated. The virtualised spatial audio file in the converted format and the non-virtualised spatial audio file in the original format are then both stored by the server 202 and appear in the list of audio files in the file region 402. This is exemplified in Figs. 4 and 5, in which each listed file is listed twice, once in its virtualised AAC form (e.g. file 403A) and once its original, non-virtualised, MP4 form (e.g. file 403B). The user may then play back the virtualised AAC format audio file within the web browser. The user is thus easily able to listen to the spatial audio file from any device capable of executing a web browser.

In an example, only the virtualised spatial audio file in the converted browser-compatible format (e.g. AAC or MP3) is added to the list of audio files in the file region 402 in response to the drag operation (thus, for example, in Figs. 4 and 5, the audio file 403A in the AAC format would be listed but not the audio file 403B in the MP4 format). This helps save storage capacity at the server 202. On the other hand, if both formats are added to the list (as exemplified in Figs. 4 and 5), this gives the user the flexibility to, for example, download the non-virtualised spatial audio file in its original format (e.g. MP4) at a later time (for example, if the user accesses the web application using a different device with the capability to play back non-virtualised MP4 audio files). In an example, files listed in the file list of the file region 502 may be downloaded by a user (e.g. by selecting a suitable virtual button of the GUI 401, not shown) and stored in local storage.

In an example, a spatial audio file may be shared between a first user and a second user directly using the web application. For example, each user may have an electronic profile associated with the web application. In order to access their profile, the user must log in to the web application using suitable credentials (e.g. a username, such as an email address, and password) which have been previously registered with the web application. Each user profile is associated with a unique user ID (e.g. a username, such as an email address). A user's profile is associated with one or more storage areas accessible only to the user and/or one or more storage areas accessible to the user plus one or more other users. Different storage areas may be virtual storage areas which use capacity of the storage medium 307 of the server 202 and which are associated with the unique user ID of a given user.

A storage area which is only accessible to the user and/or selected other users may be referred to as a private storage area. Such a storage area may be useful, for example, for enabling a music producer to share a spatial audio file which is not ready for public release (e.g. a non-final mix) with a recording artist. In this case, the recording artist may grant the music producer access to a particular private storage area associated with the recording artist's user profile. Access to a storage area is enabled via a GUI like GUI 401 of Figs. 4 and 5, for example. If a user has access to a particular storage area (e.g. one associated with their user ID or one associated with another user ID which they have been given permission to access), they may be presented with a file list of the files in that storage area in the way exemplified in Figs. 4 and 5, for example.

The functionality enabled by the GUI 401 of Figs. 4 and 5 (e.g. the drag and drop virtualisation operation) is available to all users with access to a particular storage area. Thus, for example, if a music producer has been given permission to access a storage area of a recording artist, the music producer may drag and drop a spatial audio file into that storage area (e.g. as exemplified with respect to Fig. 5), thereby sharing it with the recording artist. If the drag and drop operation is performed on a non-virtualised spatial audio file which cannot be played back in a web browser, the drag and drop operation also triggers generation of a virtualised version of the spatial audio file which can be played back in a web browser (as previously described). The music producer is thus able to easily share a spatial audio file with a recording artist in a format which is easily playable by that recording artist with a very simple operation.

Another type of storage area is an open or public storage area. This is a storage area which is not private and which anybody can access. This may be used, for example, if a user wishes for an audio track (e.g. a teaser for a new music album) to be made available free of charge to the public.

To facilitate easy sharing of the files stored in a particular storage area, the web application may provide the user with the option to generate a link (e.g. a uniform resource locator, URL) associated with a particular storage area to be shared with other users (e.g. via an electronic message such as an email, WhatsApp ^{®} message or the like). Another user may then use that link to connect to the web application and view the particular storage area that link is associated with. In an example, when viewing a particular storage area via the GUI 401, a "Share Link" virtual button (not shown) may be provided. If a user selects the "Share Link" virtual button, a link associated with the storage area is generated. The user may then copy the link and share it with another user.

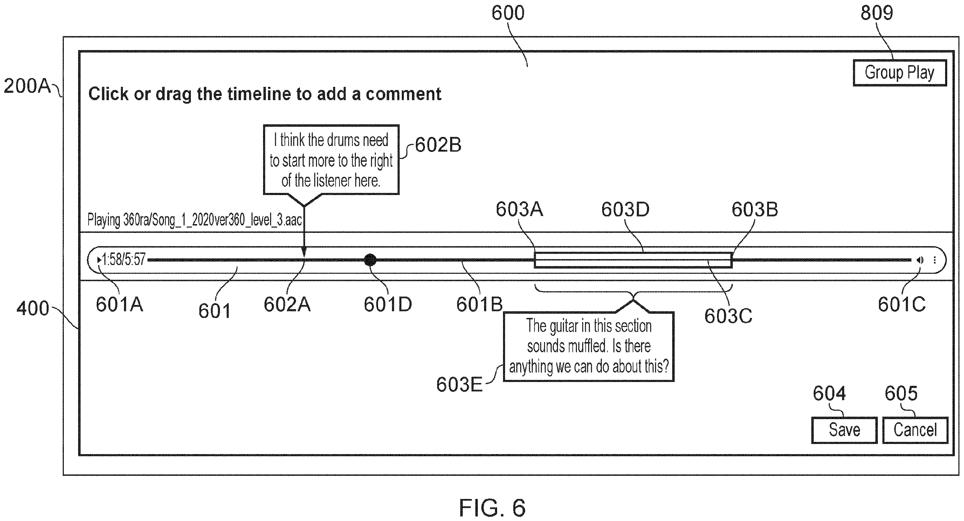

Generation of links in this way may be applicable to both private and open storage areas. For an open storage area, any user may use the link to visit the storage area. For a private storage area, using the link may first require the user to log in to the web application. Once the user has logged in, the user is granted access to the storage area only if they have previously been given permission to access the private storage area. Links may also be associated with a particular file (rather than a particular storage area), meaning another user may use the link to be directed to playback of a particular file in the web application (e.g. by being directed to the interactive comments GUI 600 associated with that file - see Fig. 6).

A user may create a new storage area by selecting the "+" virtual button 504 of the GUI 401, for example. Selection of the virtual button 504 then provides an options box (not shown) to be displayed. The options box allows the user to, for example, enter a name for the new storage area and select whether it is private or public.

As described, a private storage area is accessible only to the user and, optionally, specified other user(s). When creating a private storage area, the user is presented with the option to add the user ID(s) of other user(s) they wish to permit to access the private storage area. For example, a recording artist may create a new private storage area and add the user ID of their music producer to allow the music producer to save spatial audio files to the private storage area for review by the recording artist. A public storage area, on the other hand, is accessible to any other user and thus adding specific user ID(s) to allow access to the associated user(s) is not necessary.

The user ID(s) of user(s) given permission to access a particular private storage area are stored by the server 202 in a permission list associated with that private storage area. The server 202 then only allows a user with a user ID on the permission list to access that private storage area. For example, to access a particular private storage area, a user must be logged in to the web application and their user ID (which they used to log in to the web application) must be on the permission list associated with that private storage area. A user may also change the user permissions associated with a particular private storage area at a later time (e.g. using a settings menu of the GUI 401, not shown). For example, if a recording artist changes the music producer they work with, they may choose to remove the user ID of the previous music producer from the permission list of the relevant private storage area and add the user ID of the new music producer. A user is thus given control over which other user(s) can access private storage areas created by that user for storing and sharing spatial audio files, thereby providing improved security.

For further improved security, files added to a private storage area which a plurality of users have permission to access may be automatically removed from that private storage area after a predetermined period of time (e.g. one week, one month or one year) starting from the time at which the file was stored. Such files may be deleted or may be moved to another private storage area to which only the creator of the file has access. The creator of a file may be identified (e.g. via their unique user ID) in metadata associated with the file.

Once a new storage area has been created, files can be added to the file list in the file region 402 of that storage area in the way previously described.

The present technique thus provides an efficient, easy-to-use, secure and widely compatible platform for sharing spatial audio files. In particular, with the present technique, any user with a web browser and who has created a profile with the web application may listen to virtualised spatial audio files (subject to the relevant permissions).

Further enhancements may also improve the way in which different users are able to interact with the web application and with each other in order to collaborate in the creation of spatial audio tracks.

An example enhancement is shown in Fig. 6. This enhancement provides an interactive comments GUI 600 for enabling a user to quickly and easily associate electronic comments with a spatial audio file. For example, if a music producer has created a new spatial audio file (e.g. representing a new spatial audio mix) and virtualised it and shared it with a recording artist via the web application (in the way previously described), the comments GUI 600 allows the recording artist to quickly and easily provide feedback about the spatial audio file to the music producer.

In the example of Fig. 6, the comments GUI 600 is provided for a specific spatial audio file selected for comment by the user. A user selects a spatial audio file for comment by selecting a checkbox 405 next to the relevant spatial audio file in the file list of the file region 402 of GUI 401 and then selecting the "Comment" virtual button 503. This causes the comments GUI 600 for that particular spatial audio file to then be displayed. In this example, the spatial audio file selected for comment is "Song_1_2020ver_360_level_3.aac".

The comments GUI 600 for the selected spatial audio file includes playback controls 601. Like the playback controls 404, the playback controls 601 include, for example, a play / pause virtual button 601A (with corresponding functionality to the play / pause virtual button 404A), a progress bar 601B with progress marker 601D (with corresponding functionality to the progress bar 404B and progress marker 404D, respectively) and a volume virtual button 601C (with corresponding functionality to the volume virtual button 404C).

The user is also able to add comments at certain playback temporal positions or over certain playback temporal ranges of the spatial audio file using the progress bar 601B. A playback temporal position and a playback temporal range of a spatial audio file are examples of playback temporal information of the spatial audio file.

To add a comment at a particular playback temporal position, the user selects a position along the progress bar 601B corresponding to that playback temporal position. The user does this by clicking or touching the progress bar at the relevant position, for example. In this example, the user has selected a position 602A along the progress bar 601. Selection of the position 602A along the progress bar 601 then causes the comment box 602B to appear. The user is able to then insert a comment (e.g. by typing on a physical or virtual keyboard) in the comment box 602B. In this example, the comment is "I think the drums need to start more to the right of the listener here." The user (e.g. recording artist) is thus able to comment on the virtual spatial distribution of sounds represented by the spatial audio file at the temporal playback position corresponding to the point 602A.

To add a comment over a particular playback temporal range, the user selects a portion of the progress bar 601B corresponding to that playback temporal range. The user does this by performing a drag operation over the relevant portion of the progress bar (e.g. using a mouse or a touch screen drag operation), for example. In this example, the user has selected a portion 603C of the progress bar 601B by performing a drag operation from position 603A of the progress bar (marking the start of the portion 603C) to position 603B of the progress bar (marking the end of the portion 603C). The selected potion 603C may be visually distinguished from the remaining portion(s) of the progress bar. In this example, a translucent box graphic 603D is overlaid on the selected portion 603C to allow the selected portion 603C to be distinguished.

Selection of the portion 603C of the progress bar 601 then causes the comment box 603E to appear. The user is able to then insert a comment (e.g. by typing on a physical or virtual keyboard) in the comment box 603E. In this example, the comment is "The guitar in this section sounds muffled. Is there anything we can do about this?" The user (e.g. recording artist) is thus able to comment on the virtual spatial distribution of sounds represented by the spatial audio file over the playback temporal range corresponding to the portion 603C.

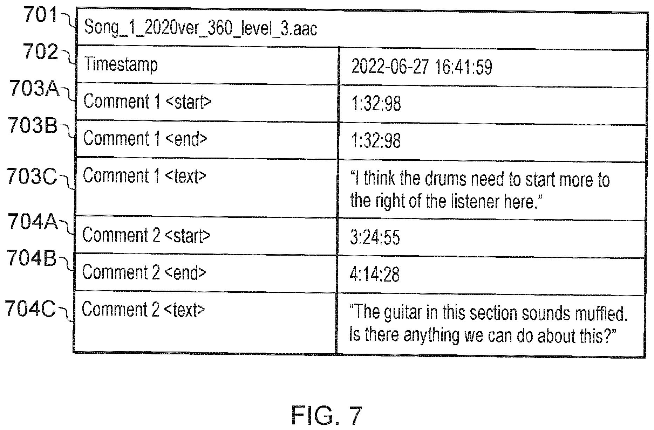

Once the user has added all the comment(s) they wish to, they may save the comments by selecting the "Save" virtual button 604. This saves data indicative of the comments as, for example, metadata associated with the spatial audio file and thus allows another user (e.g. music producer) to view the comments. An example structure of such metadata is shown in Fig. 7. Alternatively, the user may not wish to save the comments. In this case, they select the "Cancel" virtual button 605 and no data indicative of the comments is saved.

In response to selecting either the "Save" or "Cancel" virtual buttons 604 or 605, the GUI 401 is once again shown. In the case that the comments are saved and the same spatial audio file is then selected again for comment (via the relevant checkbox 405 and "Comment" virtual button 503), the GUI 600 will once again be shown and will show the comments which were previously added and saved. This allows, for example, any user with access to the storage area in which the spatial audio file has been saved to view and edit comments which have been previously made. New comments may also be added. Once the "Save" virtual button 604 is selected, any new comments and edits are saved (e.g. as updated metadata) and will, in turn, be shown the next time the spatial audio file is selected for comment.

This facilitates improved interaction and collaboration between users. For example, it allows a recording artist and music producer with access to the same storage area (e.g. a private storage area associated with the recording artist but which the music producer has permission to access, or vice versa) to exchange one or more rounds of comments regarding a particular spatial audio file. This may then help the music producer when, for example, producing an updated version of the spatial audio file which takes into account the recording artist's comments.

Fig. 7 shows an example structure (set) of metadata representing the comments added to the spatial audio file "Song_1_2020ver_360_level_3.aac" in the example of Fig. 6. The metadata is uniquely associated with the spatial audio file by the web application. In this example, the unique association is implemented by the metadata including the filename 701 of the spatial audio file "Song_1_2020ver_360_level_3.aac" with which it is associated. Each file in a given storage area has a unique filename (so all files within a given storage area have a different respective filename). Furthermore, the metadata associated with a particular spatial audio file is stored in the same storage area as that particular spatial audio file. This ensures each set of metadata is uniquely associated with its corresponding spatial audio file in a one-to-one relationship.

As well as the filename 701, each set of metadata includes a "Timestamp" field and value 702 and a "<start>", "<end>" and "<text>" field and value for each comment associated with the relevant spatial audio file. The metadata of Fig. 7 corresponds to the commented spatial audio file "Song_1_2020ver_360_level_3.aac" of Fig. 6 with two comments. There is therefore a first "<start>", "<end>" and "<text>" field and value set 703A-C for the first comment and a second "<start>", "<end>" and "<text>" field and value set 704A-C for the second comment.

The "Timestamp" value indicates, for example, the date and time at which the spatial audio file was stored in the storage area of the web application. Alternatively, or in addition, it may indicate when the latest set of comments was saved.

The "<start>" value for a comment indicates a time over the playback duration of the spatial audio file at which a playback temporal range associated with the comment begins. The "<end>" value for a comment indicates a time over the playback duration of the spatial audio file at which a playback temporal range associated with the comment ends. A playback temporal position corresponds to a playback temporal range with "<start>" and "<end>" values which are the same. The "<text>" value for a comment stores the text of the comment entered by the user.

Thus, for example, for the comment in the first comment box 602B shown in Fig. 6 (which is associated with a playback temporal position of the spatial audio file), the "<start>" and "<end>" values are both 1 :32:98 (1 minute, 32 seconds, 98 hundredths of a second) and the "<text>" value is "I think the drums need to start more to the right of the listener here." For the comment in the second comment box 603E shown in Fig. 6 (which is associated with a playback temporal range of the spatial audio file), the "<start>" and "<end>" values are 3:24:55 (3 minutes, 24 seconds, 55 hundredths of a second) and 4:14:28 (4 minutes, 14 seconds, 28 hundredths of a second), respectively, and the "<text>" value is "The guitar in this section sounds muffled. Is there anything we can do about this?".

When a spatial audio file in the file list of the file region 402 is selected for comment (e.g. by selecting the relevant checkbox 405 and then clicking or touching the "Comment" virtual button 503), the web application retrieves the metadata structure associated with the selected spatial audio file to enable any comment(s) to be displayed at the relevant location(s) along the progress bar 601B of the interactive comments GUI 600. Any further comments which are added are then added to the metadata structure. Furthermore, any edits to previous comments are also saved. Comments may be edited by, for example, the user clicking or selecting the relevant comment box. This allows the user to then edit the text in that comment box.

The metadata structure of Fig. 7 is only an example and other types of metadata associated with a particular spatial audio file may also be included in the metadata structure.

For example, in order to allow a user (e.g. recording artist) to obtain more information about the spatial audio mix represented by the spatial audio file, the metadata may indicate respective virtual spatial positions of one or more sound sources of the spatial audio mix.

For example, in the 360RA format, the position of one or more sound sources in the spherical space 100 may be indicated by the metadata (e.g. using a textual label field and value and associated polar coordinate fields and values for each sound source). This information may then be used by the web application to graphically represent the virtual positions of the one or more sound sources.

For example, the web application may generate an image of the spherical space 100 and one or more points respectively representing the one or more sound sources (such as points 101A, 101B and/or 101C) in the spherical space and display this with the comments in the comments GUI 600. This gives the user a visual indication of the sound source position(s) for the spatial audio mix they are listening to. The user may also be able to provide feedback by interacting with the generated image. For instance, the generated image may be an interactive 3D graphical image which enables the user to select and drag (e.g. using a mouse or touch screen drag operation) a particular point representing a sound source to a new location of the spherical space. The corresponding metadata for that point is then updated to reflect the new location (e.g. by updating the polar coordinate values to correspond to the new location) when the "Save" virtual button 604 is selected.

This provides another way for one user (e.g. a recording artist) to provide feedback to another user (e.g. a music producer) about a particular spatial audio file. For instance, instead of or in addition to adding a comment such as that of comment box 602B to indicate they want to hear a new version of the spatial audio file with the drums virtually located more to the right of the listener, the user may instead move the point corresponding to the drums as a sound source in the interactive 3D graphical image of the spherical space further towards the right. The flexibility via which the user is able to interact with the comments GUI 600 in order to provide feedback a particular spatial audio file is therefore improved.

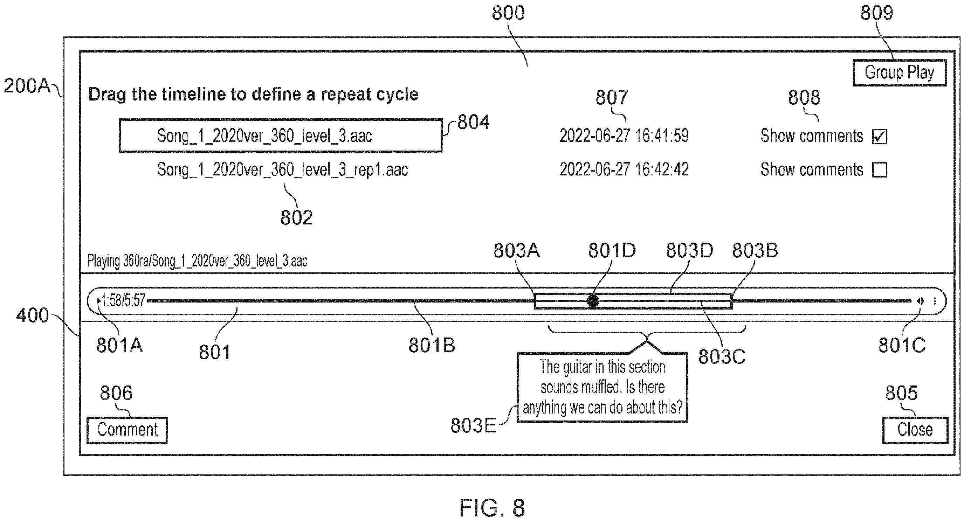

Fig. 8 shows another example enhancement. This enhancement allows a user to sequentially and repeatedly play back respective corresponding portions of a plurality of spatial audio files in order to compare them.

In an example, the user selects a plurality of spatial audio files to compare by selecting the relevant checkboxes 405 of those files in the file list of the file region 402 of GUI 401. Once selected, the user then clicks or touches the "Compare" virtual button 502. This causes interactive compare GUI 800 to be displayed, as shown in Fig. 8. In this example, the selected spatial audio files to be compared are "Song_1_2020ver_360_level_3.aac" and "Song_1_2020ver_360_level_3._rep1.aac".

The compare GUI 800 includes playback controls 801. Like the playback controls 404, the playback controls 801 include, for example, a play / pause virtual button 801A (with corresponding functionality to the play / pause virtual button 404A), a progress bar 801B with progress marker 801D (with corresponding functionality to the progress bar 404B and progress marker 404D, respectively) and a volume virtual button 801C (with corresponding functionality to the volume virtual button 404C).

When using the compare GUI 800, the selected spatial audio tracks are sequentially and repeatedly played back. Thus, in the example of Fig. 8, "Song_1_2020ver_360_level_3.aac" will be played back, followed by "Song_1 2020ver_360_level_3_rep1.aac", followed again by "Song_1 2020ver_360_level_3.aac", followed again by "Song_1 2020ver_360_level_3_rep1.aac" and so on. This continues until the user selects the "Close" virtual button 805, for example, which causes the home GUI 401 to once again be displayed. Although only two spatial audio tracks are selected for sequential and repeating playback in this example, more than two tracks may also be selected and sequentially and repeatedly played back in this way so as to allow comparison between more than two tracks.

The selected spatial audio files being compared are listed in a comparison list 802 displayed by the compare GUI 800 and the spatial audio file currently being played back is indicated to the user by visually distinguishing its entry in the comparison list 802 from the entries of the other spatial audio file(s). For example, in Fig. 8, it is currently "Song_1 2020ver 360_level_3.aac" which is being played back. A box graphic 804 highlighting "Song_1_2020ver_360_level_3.aac" in the comparison list 802 is therefore displayed. When the next spatial audio file "Song_1_2020ver_360_level_3_rep1.aac" starts playing, the box graphic 804 will then move to highlight the entry for this spatial audio track in the comparison list 802 accordingly.

The comparison list 802 also includes the timestamp 807 of each respective listed spatial audio file (as indicated by the relevant spatial audio file metadata when, for example, the timestamp of the metadata indicates the date and time at which the spatial audio file concerned was stored in the storage area of the web application). This helps the user to more easily distinguish between, for example, a first spatial audio file representing an updated version of a spatial audio mix (with a more recent timestamp) and a second spatial audio file representing an original version of that spatial audio mix (with an older timestamp).

To provide enhanced spatial audio file comparison, a user is able to sequentially listen to only corresponding playback temporal ranges of each spatial audio file in the comparison list rather than sequentially listening to each spatial audio file in its entirety.

This is exemplified in Fig. 8, in which the user selects a portion of the progress bar 801B corresponding to a desired playback temporal range of the spatial audio file currently being played back ("Song_1_2020ver_360_level_3.aac" in this case). The user does this by performing a drag operation over the relevant portion of the progress bar (e.g. using a mouse or a touch screen drag operation), for example.

In this example, the user has selected a portion 803C of the progress bar 801B by performing a drag operation from position 803A of the progress bar (marking the start of the portion 803C) to position 803B of the progress bar (marking the end of the portion 803C). The selected potion 803C may be visually distinguished from the remaining portion(s) of the progress bar. In this example, a translucent box graphic 803D is overlaid on the selected portion 803C to allow the selected portion 603C to be distinguished.

Once selected, the repeating sequential playback of the spatial audio files in the comparison list 802 is constrained to the start and end times defining the playback temporal range corresponding to the selected portion 803C. Thus, for example, if the playback temporal range corresponding to the selected portion 803C has start time 3:18:34 and end time 4:05:27, then "Song_1_2020ver_360_level_3.aac" will be played back from playback temporal position 3:18:34 to playback temporal position 4:05:27, followed by playback of "Song_1_2020ver_360_level_3_rep1.aac" from playback temporal position 3:18:34 to playback temporal position 4:05:27, followed again by "Song_1_2020ver_360_level_3.aac" from playback temporal position 3:18:34 to playback temporal position 4:05:27, followed again by "Song_1_2020ver_360_level_3_rep1.aac" from playback temporal position 3:18:34 to playback temporal position 4:05:27, and so on. This continues until the user selects the "Close" virtual button 805, for example, which causes the home GUI 401 to once again be displayed.

This function is particularly useful for allowing a user to compare different versions of a spatial audio mix, which may sound the same at most playback temporal positions but which may differ over a particular playback temporal range of interest. For example, "Song_1_2020ver_360_level_3.aac" and "Song_1_2020ver_360_level_3_rep1.aac" may represent different spatial audio mixes of the same musical recording. If each spatial audio mix is identical except for a particular musical instrument in one spatial audio mix being in a different respective virtual position to that of the other spatial audio mix over the playback temporal range corresponding to the selected portion 803C, this function allows the user to sequentially and repeatedly listen to the two spatial audio mixes over only this playback temporal range and to thus focus on the audio qualities of the difference.

The comparison GUI 800 also includes "Show comments" checkboxes 808 for each spatial audio file in the comparison list 802. If the checkbox for a particular spatial audio file is selected, any comment(s) associated with that spatial audio file are displayed at corresponding playback temporal position(s) or over corresponding playback temporal range(s) of the progress bar 801B. Furthermore, if a particular temporal playback range has been selected for the comparison (e.g. the particular temporal playback range corresponding to selected portion 803C), only comment(s) associated with temporal playback position(s) within the comparison playback temporal range with or temporal playback range(s) with a <start> or <end> time within the comparison playback temporal range are displayed.

For example, in Fig. 8, the checkbox 808 for the spatial audio file "Song_1_2020ver_360_level_3.aac" is selected and the comment "The guitar in this section sounds muffled. Is there anything we can do about this?" is associated with a playback temporal range having a <start> time (3:24:55) which is within the comparison playback temporal range corresponding to the selected portion 803C (which is defined between start time 3:18:34 and end time 4:05:27). This comment is therefore displayed in comment box 803E.

However, the comment "I think the drums need to start more to the right of the listener here" is not displayed. This is because this comment is associated with the spatial audio file "Song_1_2020ver_360_level_3_rep1.aac" for which the relevant checkbox 808 has not been selected. Furthermore, even if the relevant checkbox 808 had been selected, this comment would still not be displayed, since it is associated with a playback temporal position (1:32:98) which lies outside the comparison playback temporal range.

The use of comments in this way helps provide context to a user when comparing two spatial audio files. For example, the file "Song_1_2020ver_360_level_3_rep1.aac" may represent an updated version of the spatial audio mix represented by the file "Song_1_2020ver_360_level_3.aac" with an improved guitar sound generated by a music producer in response to the comment shown in comment box 803E. The user (e.g. recording artist who wrote the comment) is thus able to quickly determine whether their comment has been addressed.

If a user wishes to edit the comments associated with the spatial audio file currently being played back (during the sequential repeating playback of the plurality of spatial audio files in the comparison list), they may select the "Comment" virtual button 806. This causes the comments GUI 600 of the spatial audio file concerned to be displayed (thereby allowing the user to quickly and easily add or edit comments based on the comparison they have just listened to). In this example, since it is the file "Song_1_2020ver_360_level_3.aac" which is currently being played back (as indicated by the box graphic 804), it is the comments GUI 600 for this file which will be displayed (as exemplified in Fig. 6) if the "Comment" virtual button 806 is selected.

As well as textual comments like those exemplified in comments boxes 602B, 603E and 803E, comments may also take the form of voice notes or the like. The web application may also implement real time voice chat functionality to allow real time collaboration between different users. It may also allow, for example, one user to share the audio output of playback enabled by the comments GUI 600 or comparison GUI 800 for comment with other users (with an appropriately determined latency to ensure synchronised listening between remote users). This may be referred to as group play functionality.

In an example, one user may initiate a group play session by selecting a "Group Play" virtual button 809. This virtual button may be displayed as part of a comments GUI 600 and/or comparison GUI 800 currently being output to the user. Selection of the "Group Play" virtual button 809 causes a user selection menu (not shown) to be displayed. The user selection menu may comprise a search box into which the user may type the user ID (or, for example, real name, if this information is available) of a user they wish to have a group play session with. Relevant user IDs are then populated in the user selection menu and a user may then select (e.g. by clicking or touching) the user ID they were looking for. The user may repeat this a plurality of times in order to define a group of user IDs. Once all users who are to join the group have been selected, the user may select an "Invite" virtual button (not shown) of the user selection menu. This causes a group play session to be started and sends an alert (e.g. via an electronic message such as email or WhatsApp ^{®} message) with a link to join the group play session to be sent to each of the selected users. If the storage area in which the spatial audio file(s) concerned are stored is a private storage area, only users who are logged in with a permitted user ID will able to join the group play session (even if they receive an invite).

During a group play session, the comments GUI 600 or comparison GUI 800 from which the initiating user initiated the group play session is displayed to all users. Playback of the relevant spatial audio file(s) is then controlled by the initiating user but can be heard by all users in the group session. The group play session may incorporate real time voice and/or video chat so that users may discuss the spatial audio file(s) as they are played back. Users may also be able to added textual comment boxes in the way previously described which are then visible to all users in real time. Thus, for example, during a group session, if a new comment is generated, data indicative of this comment is transmitted from the device 200 of the user generating the comment to the server 202. The server then causes the comment to be displayed as part of the currently-displayed comments GUI 600 or comparison GUI 800 so that it can be seen by all users. The server also updates the metadata of the file to incorporate the newly added comment. Comments generated during the group play session are therefore visible in real time to all participants of the group play session. Furthermore, once the group play session for particular file(s) has ended, the comments generated during the group play session are saved to the metadata associated with those file(s) for future reference. This may be applied to either textual or recorded audio comments.

The present technique therefore makes it easier for plurality of users (e.g. all members of a band and their music production team) to collaborate remotely and provide feedback on particular spatial audio file(s). For example, live voice and/or video chat enables an informal real time discussion between the users in the group play session about the spatial audio file(s) as they are played back. At the same time, formal recorded feedback (in the form of textual and/or audio comments) may be shared between the users in the group play session in real time and may also be automatically stored as metadata associated with the spatial audio file(s) for future reference. Thus, after the group play session has ended (e.g. by the initiating user selecting an "End Session" virtual button (not shown) or the like), any user who has access to the spatial audio file(s) (not only those who joined the group play session) may review comments generated for the spatial audio file(s) during the group play session.

In an example, whilst a spatial audio file(s) is subject to a group play session, it may not be edited (e.g. deleted or have comments generated for it) by any user who is not part of the group play session.

Furthermore, to ensure all users in the group play session are able to concurrently listen to a spatial audio file as it is played back, prior to playback, a test of the bandwidth between each user's device 200 and the server 202 may be conducted. Only those users who have a bandwidth over a predetermined threshold will be able to listen to the spatial audio file (the playback of which is controlled by the initiating user).

Furthermore, a delay may be introduced according to the lowest bandwidth and/or latency available among the users. The delay may be implemented at the initiating user's device 200 by delaying playback of the spatial audio file following selection of the play / pause virtual button 404A or 601A by the relevant delay time. A corresponding delay may be implemented at the device 200 of each of the other users in the group play session by a "play" command transmitted from the initiating user's device 200 to each of the other users' devices 200 via the server 202 (the "play" command being transmitted by the initiating user's device in response to them selecting the play / pause virtual button 404A or 601A to initiate playback) comprising a future time stamp. Each of the other users' devices then only initiates playback of the spatial audio file at the time indicated by the future timestamp. In such an example, each user device 200 uses a shared clock (e.g. a network time protocol, NPT, clock) to ensure playback initiated at the future timestamp actually occurs at the same time for each user device 200.

For example, if the lowest bandwidth of a user in the group play session indicates a delay time of 2 seconds is appropriate then, when the initiating user of the group play session selects the play / pause virtual button 404A or 601A to begin playback of the audio file, playback for the initiating user is delayed by 2 seconds. Thus, for example, if the time at which the initiating user selects the play / pause virtual button is 13:04:25 (13 hours, 4 minutes and 25 seconds) then playback will not begin until 2 seconds later at 13:04:27 (13 hours, 4 minutes and 27 seconds). Furthermore, in response to the initiating user selecting the play / pause virtual button 404A or 601A, a "play" command is transmitted, via the server 202, to the device of each of the other users in the group play session. The "play" command comprises a future time stamp of 13:04:27 (13 hours, 4 minutes and 27 seconds). The "play" command causes the device of each of the other users in the group play session to begin playback of the spatial audio file at 13:04:27. All users thus experience concurrent (synchronised) playback of the spatial audio file, thereby facilitating the creation of group feedback on the spatial audio file.

In an example, a generated comment (like that of comment box 602B, 603E or 803E) may be associated with further metadata (stored as additional metadata in the metadata structure of Fig. 7, for example) indicating, for instance, an identifier of the user who made (or last edited) the comment (that is, the comment's creator or last editor) and/or a priority associated with the comment. This further metadata can then be utilised by the interactive comments GUI 600 and/or interactive compare GUI 800 to help users to sort and filter the comments appropriately.

In one example, comments by different users are presented with different respective visual characteristics (e.g. by indicating the username of the user who made (or last edited) the comment, having different colour comment boxes for different respective users or the like). A particular user may then select which user(s)' comments are to be displayed using a dropdown menu (not shown) or the like. This allows a user to more easily find relevant comments if a large number of comments from a number of different users have been generated for a particular file.

In one example, a user may allocate a priority level to a comment when the comment is generated. For example, the priority of a comment may be prioritised as "High" or "Low" (although more than two priority levels could be used). A user may assign a priority to a particular comment when, for example, typing it in the relevant comment box by selecting the priority level via a suitable drop down menu (not shown) or the like. In an example, when the GUI 600 or 800 is displayed, only comments with the one or more highest priority levels are initially shown. A "Show all comments" virtual button (not shown) provided by the GUI 600 or 800 may then be selected by the user. This causes all comments (including the one or more lower priority levels) to be shown. The user may also be able to filter the comments shown using a drop down menu (not shown) or the like so that only comments with a particular priority level are shown (e.g. "High" priority comments only or "Low" priority comments only).

In one example, particular user IDs may be associated, by default, with a particular comment priority level. Thus, for example, if an agreement between a recording artist and a music producer is that the recording artist is able to make the final decision about the spatial audio mix which is to form the master recording, the user ID of the recording artist may, by default, be associated with a "High" priority level and the user ID of the music producer may, by default, be associated with a "Low" priority level. The reverse situation may also apply. In this case, the comments displayed when the GUI 600 or 800 for the file concerned is first displayed will include only those generated by the "High" priority user. The interacting user will then have to enable the comments of the "Low" priority user to be shown manually. Newly created comments with a certain priority level may also trigger an alert to be transmitted to one or more other users (e.g. all permissioned users of a particular private storage area in which the file concerned is stored). For example, when a "High" priority comment is generated or edited, an email or mobile alert may be transmitted to all permissioned users of the relevant storage area. The alert may indicate the text of the comment and/or contain a link which, when selected, directs the user to the interactive comments GUI 600 of the relevant file.

In an example, the described functionality (including the virtualisation of a spatial audio file, the conversion of a spatial audio file and/or the addition of comments to a spatial audio file, for example) may be incorporated in an existing cloud storage system such as Sony ^{®} Ci or the like.

An interacting user is thus able to review and sort comments quickly and easily based on factors such as the particular user who generated a particular comment and/or the relative importance (indicated by the priority level) of those comments, for example. This improves the interactive process experienced by the user during a collaboration.

In the above examples, the term "spatial audio mix" refers to an audio mix represented by a spatial audio file. As well as being defined in ways traditional audio mixes are defined (e.g. by the volume of each track (sound source) in a multitrack recording), it is further defined by the virtual position of each sound source according to the capabilities of the spatial audio format concerned. For example, for the 360RA format, different spatial audio mixes of the same musical recording (defined by different respective spatial audio files) may be obtained by changing the virtual position of one or more sound sources (e.g. points 101A, 101B and 101C in Fig. 1) in the spherical space 100.

In the above examples, audio files are considered. However, the present technique is also applicable to files containing both audio and video. In particular, it may be applied to files (e.g. MP4 files) which contain video and also audio encoded in a spatial audio format. Again, the specifics of the virtualisation technique implemented by the server 202 (including, for example, reduction of channels from 13 (or 14) to stereo in 360RA) are already known in the art and are therefore not described in detail here.

Thus, more generally, the present technique is applicable to any file encoding audio in a spatial audio format.

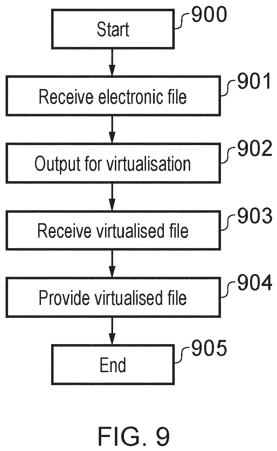

Fig. 9 shows a first data processing method according to an example. The data processing method is executed by a processor of a data processing apparatus (such as the processor 305 of server 202, for example). The data processing method is therefore a computer-implemented data processing method.

The method starts at step 900.

At step 901, an electronic file comprising audio information encoded in a spatial audio format (e.g. an MP4 audio or video file with audio encoded in a 360RA format) is received from a second data processing apparatus (e.g. device 200A or 200B) via a web application (e.g. via a drag-and-drop operation of the file into the file region 402 of the home GUI 401 of the web application exemplified in Figs. 4 and 5). For example, the electronic file is transmitted, via the web application, from the device 200A or 200B to the server 202 via the communication interfaces 303 and 308 over the network 201.

At step 902, the received electronic file is output for virtualisation of the audio information encoded in the spatial audio format. The virtualisation comprises changing a number of channels of the audio information to allow playback of the audio information (e.g. by the second data processing apparatus or another data processing apparatus) via the web application (e.g. using playback controls 404) while retaining a spatial audio effect of the audio information. Thus, for example, the virtualisation comprises reducing the number of channels of audio information in a 360RA format from 13 (or 14) to 2 (in the case of stereo) or 6 (in the case of 5.1) whilst retaining the spatial audio effect of 360RA format. The virtualisation may be followed by conversion of the audio information of the electronic file into a format (e.g. MP3, AAC, WAV or FLAC) which can be played back by a web browser executed by the second data processing apparatus. The virtualisation is executed either by the same data processing apparatus (e.g. server 202) which originally receives the electronic file or by a third data processing apparatus (not shown) to which the electronic file is transmitted for virtualisation.

At step 903, a virtualised version of the electronic file comprising the virtualised audio information is received (e.g. as an output of the internally-executed virtualisation process from the processor 305 and/or memory 306) or from the third data processing apparatus via the communication interface 308, as applicable).

At step 904, the virtualised version of the electronic file is provided via the web application (e.g. as a selectable MP3, AAC, WAV or FLAC file listed in the file region 402 of the home GUI 401 of the web application exemplified in Figs. 4 and 5). For example, the virtualised version of the electronic file is transmitted, via the web application, from the server 200 to the device 200A or 200B via the communication interfaces 308 and 303 over the network 201.This allows, for example, playback of the audio information by the second data processing apparatus (or by another data processing apparatus) via the web application (e.g. using playback controls 404).

Playback of the audio information via the web application may also include the web application providing (that is, making available) the virtualised version of the electronic file for download onto a local storage medium (e.g. storage medium 302) of the second data processing apparatus (or of another data processing apparatus) to allow local playback using an appropriate software application (e.g. the web browser providing the web application or a non-browser audio playback software application). Thus, the audio information of the virtualised version of the electronic file may be streamed using a web browser, locally downloaded and played back using the web browser or locally downloaded and played back using a non-browser audio playback software application.

Locally downloading and playing back the audio information may only be an option if, for example, the downloading device has appropriate access rights, for example.

The method ends at step 905.

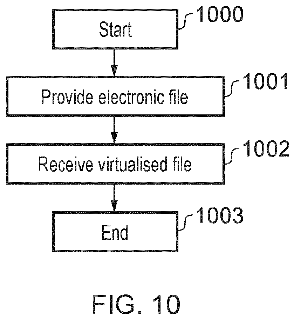

Fig. 10 shows a second data processing method according to an example. The data processing method is executed by a processor of a data processing apparatus (such as the processor 300 of device 200A or 200B, for example). The data processing method is therefore a computer-implemented data processing method.

The method starts at step 1000.

At step 1001, an electronic file comprising audio information encoded in a spatial audio format (e.g. an MP4 audio or video file with audio encoded in a 360RA format) is provided to a second data processing apparatus (e.g. server 202) via a web application (e.g. via a drag-and-drop operation of the file into the file region 402 of the home GUI 401 of the web application exemplified in Figs. 4 and 5). For example, the electronic file is transmitted, via the web application, from the device 200A or 200B to the server 202 via the communication interfaces 303 and 308 over the network 201.

The second data processing apparatus outputs the electronic file for virtualisation of the audio information encoded in the spatial audio format. The virtualisation comprises changing a number of channels of the audio information to allow playback of the audio information via the web application while retaining a spatial audio effect of the audio information, as previously described. The virtualisation may be followed by format conversion of the audio information, as previously described. The second data processing apparatus then receives a virtualised version of the electronic file comprising the virtualised audio information.

At step 1002, the virtualised version of the electronic file is received from the second data processing apparatus via the web application (e.g. as a selectable MP3, AAC, WAV or FLAC file listed in the file region 402 of the home GUI 401 of the web application exemplified in Figs. 4 and 5). For example, the virtualised version of the electronic file is transmitted, via the web application, from the server 202 to the device 202A or 202B via the communication interfaces 308 and 303 over the network 201.This allows, for example, playback of the audio information by the data processing apparatus (or by another data processing apparatus) via the web application (e.g. using playback controls 404).

Playback of the audio information via the web application may also include the web application providing (that is, making available) the virtualised version of the electronic file for download onto a local storage medium (e.g. storage medium 302) of the second data processing apparatus (or of another data processing apparatus) to allow local playback using an appropriate software application (e.g. the web browser providing the web application or a non-browser audio playback software application). Thus, the audio information of the virtualised version of the electronic file may be streamed using a web browser, locally downloaded and played back using the web browser or locally downloaded and played back using a non-browser audio playback software application. Locally downloading and playing back the audio information may only be an option if, for example, the downloading device has appropriate access rights, for example.

The method ends at step 1003.

Embodiment(s) of the present disclosure are defined by the following numbered clauses:
1. A data processing apparatus comprising circuitry configured to:
   receive, from a second data processing apparatus via a web application, an electronic file comprising audio information encoded in a spatial audio format;
   output the received electronic file for virtualisation of the audio information encoded in the spatial audio format, the virtualisation comprising changing a number of channels of the audio information to allow playback of the audio information via the web application while retaining a spatial audio effect of the audio information;
   receive a virtualised version of the electronic file comprising the virtualised audio information; and
   provide, via the web application, the virtualised version of the electronic file.
2. A data processing apparatus according to clause 1, wherein the spatial audio format is 360 reality audio.
3. A data processing apparatus according to any preceding clause, wherein the electronic file is an MP4 file.
4. A data processing apparatus according to any preceding clause, comprising converting the virtualised version of the electronic file to an MP3, AAC, WAV or FLAC format.
5. A data processing apparatus according to any preceding clause, wherein the circuitry is configured to store the virtualised version of the electronic file such that it is accessible to one or more users including a user of the second data processing apparatus.
6. A data processing apparatus according to clause 5, wherein the one or more users are permissioned users and the virtualised version of the electronic file is accessible only to the one or more permissioned users.
7. A data processing apparatus according to clause 5 or 6, wherein the circuitry is configured to:
   receive, from the second data processing apparatus via the web application, data indicating a comment about the electronic file and playback temporal timing information of the electronic file associated with the comment; and
   store, as metadata associated with the electronic file, the data indicating the comment and the playback temporal timing information such that the data indicating the comment and the playback temporal timing information is accessible to the one or more users.
8. A data processing apparatus according to clause 7, wherein the playback temporal timing information is a playback temporal position or a playback temporal range.
9. A data processing apparatus according to clause 7 or 8, wherein the comment is associated with a priority level indicated by the metadata and accessible to the one or more users for performing comment filtering.
10. A data processing apparatus according to any one of clauses 7 to 9, wherein the comment is associated with an identifier of a creator or editor of the comment indicated by the metadata and accessible to the one or more users for performing comment filtering.
11. A data processing apparatus according to any preceding clause, wherein the circuitry is configured to provide, to a plurality of second data processing apparatuses via the web application, the virtualised version of the electronic file for synchronised playback of the audio information by the plurality of second data processing apparatuses.
12. A data processing apparatus according to any preceding clause, wherein the circuitry is configured to:
   provide, to the second data processing apparatus via the web application, a virtualised version of each of a plurality of electronic files;
   receive, from the second data processing apparatus via the web application, a selection of two or more of the plurality of virtualised electronic files; and
   provide, to the second data processing apparatus via the web application, the selected two or more virtualised electronic files for sequential and repeating playback of the audio information of the selected two or more virtualised electronic files via the web application.
13. A data processing apparatus according to any preceding clause, wherein the circuitry is configured to provide, to a plurality of second data processing apparatuses via the web application, the selected two or more virtualised electronic files for synchronised playback of the audio information by the plurality of second data processing apparatuses.
14. A data processing apparatus according to clause 11 or 13, wherein the circuitry is configured to:
   receive, from one of the plurality of second data processing apparatuses via the web application, data indicating a comment about the electronic file; and
   provide, via the web application and during the synchronised playback of the audio information, the data indicating the comment to each other second data processing apparatus of the plurality of second data processing apparatuses.
15. A data processing apparatus comprising circuitry configured to:
   provide, to a second data processing apparatus via a web application, an electronic file comprising audio information encoded in a spatial audio format, the second data processing apparatus being configured to output the electronic file for virtualisation of the audio information encoded in the spatial audio format, the virtualisation comprising changing a number of channels of the audio information to allow playback of the audio information via the web application while retaining a spatial audio effect of the audio information, and the second data processing apparatus being configured to receive a virtualised version of the electronic file comprising the virtualised audio information; and
   receive, from the second data processing apparatus via the web application, the virtualised version of the electronic file.
16. A data processing method comprising:
   receiving, from a data processing apparatus via a web application, an electronic file comprising audio information encoded in a spatial audio format;
   output the received electronic file for virtualisation of the audio information encoded in the spatial audio format, the virtualisation comprising changing a number of channels of the audio information to allow playback of the audio information via the web application while retaining a spatial audio effect of the audio information;
   receive a virtualised version of the electronic file comprising the virtualised audio information; and
   provide, to the data processing apparatus via the web application, the virtualised version of the electronic file.
17. A data processing method comprising:
   providing, to a data processing apparatus via a web application, an electronic file comprising audio information encoded in a spatial audio format, the data processing apparatus being configured to output the electronic file for virtualisation of the audio information encoded in the spatial audio format, the virtualisation comprising changing a number of channels of the audio information to allow playback of the audio information via the web application while retaining a spatial audio effect of the audio information, and the data processing apparatus being configured to receive a virtualised version of the electronic file comprising the virtualised audio information; and
   receiving, from the data processing apparatus via the web application, the virtualised version of the electronic file.
18. A program for controlling a computer to perform a method according to clause 16 or 17.
19. A storage medium storing a program according to clause 18.

Numerous modifications and variations of the present disclosure are possible in light of the above teachings. It is therefore to be understood that, within the scope of the claims, the disclosure may be practiced otherwise than as specifically described herein.

In so far as embodiments of the disclosure have been described as being implemented, at least in part, by one or more software-controlled information processing apparatuses, it will be appreciated that a machine-readable medium (in particular, a non-transitory machine-readable medium) carrying such software, such as an optical disk, a magnetic disk, semiconductor memory or the like, is also considered to represent an embodiment of the present disclosure. In particular, the present disclosure should be understood to include a non-transitory storage medium comprising code components which cause a computer to perform any of the disclosed method(s).

It will be appreciated that the above description for clarity has described embodiments with reference to different functional units, circuitry and/or processors. However, it will be apparent that any suitable distribution of functionality between different functional units, circuitry and/or processors may be used without detracting from the embodiments.

Described embodiments may be implemented in any suitable form including hardware, software, firmware or any combination of these. Described embodiments may optionally be implemented at least partly as computer software running on one or more computer processors (e.g. data processors and/or digital signal processors). The elements and components of any embodiment may be physically, functionally and logically implemented in any suitable way. Indeed, the functionality may be implemented in a single unit, in a plurality of units or as part of other functional units. As such, the disclosed embodiments may be implemented in a single unit or may be physically and functionally distributed between different units, circuitry and/or processors.

Although the present disclosure has been described in connection with some embodiments, it is not intended to be limited to these embodiments. Additionally, although a feature may appear to be described in connection with particular embodiments, one skilled in the art would recognize that various features of the described embodiments may be combined in any manner suitable to implement the present disclosure.

## Claims

1. A data processing apparatus comprising circuitry configured to:
receive, from a second data processing apparatus via a web application, an electronic file comprising audio information encoded in a spatial audio format;
output the received electronic file for virtualisation of the audio information encoded in the spatial audio format, the virtualisation comprising changing a number of channels of the audio information to allow playback of the audio information via the web application while retaining a spatial audio effect of the audio information;
receive a virtualised version of the electronic file comprising the virtualised audio information; and
provide, via the web application, the virtualised version of the electronic file.

2. A data processing apparatus according to claim 1, wherein:
the spatial audio format is 360 reality audio; and/or
the electronic file is an MP4 file.

3. A data processing apparatus according to any preceding claim, comprising converting the virtualised version of the electronic file to an MP3, AAC, WAV or FLAC format.

4. A data processing apparatus according to any preceding claim, wherein the circuitry is configured to store the virtualised version of the electronic file such that it is accessible to one or more users including a user of the second data processing apparatus.

5. A data processing apparatus according to claim 4, wherein the one or more users are permissioned users and the virtualised version of the electronic file is accessible only to the one or more permissioned users.

6. A data processing apparatus according to claim 4 or 5, wherein the circuitry is configured to:
receive, from the second data processing apparatus via the web application, data indicating a comment about the electronic file and playback temporal timing information of the electronic file associated with the comment; and
store, as metadata associated with the electronic file, the data indicating the comment and the playback temporal timing information such that the data indicating the comment and the playback temporal timing information is accessible to the one or more users.

7. A data processing apparatus according to claim 6, wherein:
the playback temporal timing information is a playback temporal position or a playback temporal range; and/or
the comment is associated with a priority level indicated by the metadata and accessible to the one or more users for performing comment filtering; and/or
the comment is associated with an identifier of a creator or editor of the comment indicated by the metadata and accessible to the one or more users for performing comment filtering.

8. A data processing apparatus according to any preceding claim, wherein the circuitry is configured to provide, to a plurality of second data processing apparatuses via the web application, the virtualised version of the electronic file for synchronised playback of the audio information by the plurality of second data processing apparatuses.

9. A data processing apparatus according to any preceding claim, wherein the circuitry is configured to:
provide, to the second data processing apparatus via the web application, a virtualised version of each of a plurality of electronic files,
receive, from the second data processing apparatus via the web application, a selection of two or more of the plurality of virtualised electronic files, and
provide, to the second data processing apparatus via the web application, the selected two or more virtualised electronic files for sequential and repeating playback of the audio information of the selected two or more virtualised electronic files via the web application; and/or
wherein the circuitry is configured to provide, to a plurality of second data processing apparatuses via the web application, the selected two or more virtualised electronic files for synchronised playback of the audio information by the plurality of second data processing apparatuses.

10. A data processing apparatus according to claim 8 or 9, wherein the circuitry is configured to:
receive, from one of the plurality of second data processing apparatuses via the web application, data indicating a comment about the electronic file; and
provide, via the web application and during the synchronised playback of the audio information, the data indicating the comment to each other second data processing apparatus of the plurality of second data processing apparatuses.

11. A data processing apparatus comprising circuitry configured to:
provide, to a second data processing apparatus via a web application, an electronic file comprising audio information encoded in a spatial audio format, the second data processing apparatus being configured to output the electronic file for virtualisation of the audio information encoded in the spatial audio format, the virtualisation comprising changing a number of channels of the audio information to allow playback of the audio information via the web application while retaining a spatial audio effect of the audio information, and the second data processing apparatus being configured to receive a virtualised version of the electronic file comprising the virtualised audio information; and
receive, from the second data processing apparatus via the web application, the virtualised version of the electronic file.

12. A data processing method comprising:
receiving, from a data processing apparatus via a web application, an electronic file comprising audio information encoded in a spatial audio format;
output the received electronic file for virtualisation of the audio information encoded in the spatial audio format, the virtualisation comprising changing a number of channels of the audio information to allow playback of the audio information via the web application while retaining a spatial audio effect of the audio information;
receive a virtualised version of the electronic file comprising the virtualised audio information; and
provide, via the web application, the virtualised version of the electronic file.

13. A data processing method comprising:
providing, to a data processing apparatus via a web application, an electronic file comprising audio information encoded in a spatial audio format, the data processing apparatus being configured to output the electronic file for virtualisation of the audio information encoded in the spatial audio format, the virtualisation comprising changing a number of channels of the audio information to allow playback of the audio information via the web application while retaining a spatial audio effect of the audio information, and the data processing apparatus being configured to receive a virtualised version of the electronic file comprising the virtualised audio information; and
receiving, from the data processing apparatus via the web application, the virtualised version of the electronic file.

14. A program for controlling a computer to perform a method according to claim 12 or 13.

15. A storage medium storing a program according to claim 14.
